# EUROPEAN PATENT APPLICATION

(11) **EP 4 672 070 A1**
(43) Date of publication of application: **31.12.2025**
(21) Application number: 25163328.5
(22) Date of filing: 12.03.2025
(51) Int. Cl.: G06F 21/84

(54) **SCREEN RECORDING METHOD, ELECTRONIC DEVICE AND STORAGE MEDIUM**

(30) Priority: 24.06.2024 CN 202410817682
(71) Applicant: Beijing Xiaomi Mobile Software Co., Ltd., Beijing 100085 (CN)
(72) Inventor: HUA, Yuqing, Beijing (CN)
(74) Representative: Dehns Germany Partnerschaft mbB

(57) **Abstract**

A screen recording method, a device, an electronic device and a storage medium. The screen recording method includes (S11) in response to a screen recording operation, obtaining a first image frame collected during a screen recording process; (S12) determining whether the first image frame contains target information; (S13) in response to the first image frame containing the target information, obtaining a second image frame by blurring the target information; and (S14) generating a screen recording media file based on the second image frame.

## Description

### TECHNICAL FIELD

The present invention relates to the field of computer technology, and in particular to a screen recording method, an electronic device and a storage medium.

### BACKGROUND

With the popularity of the Internet and mobile devices, screen recording functions have become increasingly important.

### SUMMARY

According to a first aspect of the present invention, there is provided a method for screen recording, including in response to a screen recording operation, obtaining a first image frame collected during a screen recording process; determining whether the first image frame contains target information; in response to determining that the first image frame contains the target information, obtaining a second image frame by blurring the target information; and generating a screen recording media file based on the second image frame.

In an embodiment, blurring the target information includes identifying a target area including the target information in the first image frame; and in response to determining that the target area including the target information is identified, covering the target area.

In an embodiment, identifying the target area including the target information in the first image frame includes detecting information content in a preset target area; and determining that the target area including the target information is identified includes, in response to the information content being detected in the target area, determining that the target area including the target information is identified.

In an embodiment, identifying the target area including the target information in the first image frame includes calling a target area recognition model, where the target area recognition model is configured to obtain the target area including the target information by identifying based on the first image frame; and identifying the target area including the target information in the first image frame based on the first image frame and the target area recognition model.

In an embodiment, in response to the screen recording operation, obtaining the first image frame collected during the screen recording process includes creating a screen capture instance object based on a screen capture interface; encoding page information corresponding to the screen recording process into an information file based on the screen capture instance object; and obtaining the first image frame collected during the screen recording process based on a virtual display interface and the information file.

In an embodiment, determining that the first image frame contains the target information includes obtaining page information corresponding to the first image frame; determining that the first image frame contains the target information based on the page information corresponding to the first image frame.

In an embodiment, the method further includes, during the screen recording process, performing interface display element identification, retaining a interface display element as a target interface display element, and filtering out a non-target interface display element.

In an embodiment, the method further includes, in response to the first image frame not containing the target information, generating the screen recording media file based on the first image frame.

According to a second aspect of the present invention, there is provided a screen recording device, including an execution unit, for obtaining a first image frame collected during a screen recording process in response to a screen recording operation; a recognition unit, for determining whether the first image frame contains target information; and a processing unit, for obtaining a second image frame by blurring the target information in response to the first image frame containing the target information; and generating a screen recording media file based on the second image frame.

In an embodiment, the processing unit blurs the target information by identifying a target area including the target information in the first image frame; and covering the target area in response to determining that the target area including the target information is identified.

In an embodiment, the processing unit identifies the target area including the target information in the first image frame by detecting information content in a preset target area; and the processing unit determines that the target area including the target information is identified by, in response to the information content being detected in the target area, determining that the target area including the target information is identified.

In an embodiment, the processing unit identifies the target area including the target information in the first image frame by calling a target area recognition model, where the target area recognition model is configured to obtain the target area including the target information by identifying based on the first image frame; and identifying the target area including the target information in the first image frame based on the first image frame and the target area recognition model.

In an embodiment, in response to the screen recording operation, the execution unit obtains the first image frame collected during the screen recording process by creating a screen capture instance object based on a screen capture interface; encoding page information corresponding to the screen recording process into an information file based on the screen capture instance object; and obtaining the first image frame collected during the screen recording process based on a virtual display interface and the information file.

In an embodiment, the recognition unit determines that the first image frame contains the target information by obtaining page information corresponding to the first image frame; and determining that the first image frame contains the target information based on the page information corresponding to the first image frame.

In an embodiment, the execution unit is further configured for, during the screen recording process, performing interface display element identification, retaining a interface display element as a target interface display element, and filtering out a non-target interface display element.

In an embodiment, the processing unit is further configured for, in response to the first image frame not containing the target information, generating the screen recording media file based on the first image frame.

According to a third aspect of the present invention, there is provided an electronic device, including a processor; and a memory for storing processor executable instructions; where the processor is configured to execute the method according to the first aspect or any one of embodiments in the first aspect.

According to a fourth aspect of the embodiments of the present invention, there is provided a non-transitory storage medium storing instructions that, when executed by a processor, cause the processor to perform the method according to the first aspect or any one of embodiments in the first aspect is executed.

The technical solution provided by the embodiment of the present invention may include the following beneficial effects: for the first image frame collected during the screen recording process, obtaining target information, obtaining a second image frame by identifying and blurring the target information during the screen recording process, and using the second image frame to generate a screen recording media file, without the need for the user to manually select a hidden area for the screen recording information that has been recorded, thereby improving the screen recording efficiency and user experience.

It should be understood that the above general description and the detailed description below are only exemplary and explanatory, and cannot limit the present invention.

### BRIEF DESCRIPTION OF THE DRAWINGS

The drawings herein are incorporated into and constitute a part of the specification, illustrate embodiments consistent with the present invention, and are used together with the specification to explain the principles of the present invention.
FIG. 1 is a flowchart of a screen recording method according to an example embodiment.
FIG. 2 is a flowchart of a method for screen recording a target application according to an example embodiment.
FIG. 3 is a flowchart of a method for determining a target page according to an example embodiment.
FIG. 4 is a flowchart of a method for identifying a target area according to an example embodiment.
FIG. 5 is a schematic diagram of screen recording according to an example embodiment.
FIG. 6 is a flowchart of screen recording according to an example embodiment.
FIG. 7 is a block diagram of a screen recording device according to an example embodiment.
FIG. 8 is a block diagram of a screen recording device according to an example embodiment.
FIG. 9 is a block diagram of a screen recording device according to an example embodiment.

### DETAILED DESCRIPTION

Example embodiments will be described in detail, and examples thereof are shown in the accompanying drawings. When the following description refers to the accompanying drawings, unless otherwise indicated, the same numbers in different drawings represent the same or similar elements. The implementation methods described in the following example embodiments do not represent all implementation methods consistent with the present invention.

The screen recording method provided in embodiments of the present invention is applied to the screen recording scene of an electronic device with a display screen. The screen recording method involved in the embodiment of the present invention may be applied to the scene where the target information is masked during the screen recording process.

In the embodiments of the present invention, the target information involved is sometimes also referred to as privacy information, and the target area is sometimes also referred to as a privacy area. The two are used interchangeably, but the consistency of meaning should be understood. The target information in the embodiment of the present invention can be other information that needs to be masked, and is not limited to privacy information. For example, it can be information that needs to be masked and is automatically set based on the user's wishes, such as user avatar information, user name information, etc.

As smart mobile terminal devices become increasingly popular, users often need to use screen recording tools when sharing game processes, demonstrating software operations, or recording online meetings. The operations performed by users on the screen may contain privacy information, etc. If such privacy information is captured during the screen recording process, there is a consequence of privacy information leakage. Therefore, the privacy information involved in the screen recording process needs to be masked.

In the related art, when an electronic device with a display screen performs a screen recording function, the screen recording function is usually integrated in the system layer of the electronic device, and the user is usually required to manually mask the privacy information involved in the screen recording media file after the screen recording is completed. For example, use professional video masking software or online masking tools to import the screen recording media file, and manually select the area to be masked for the screen recording media file.

However, the masking methods for screen recording media files involved in the related art all require the user to manually select the area to be blurred for the screen recording media file after the screen recording is completed. The operation process is cumbersome and affects the user experience.

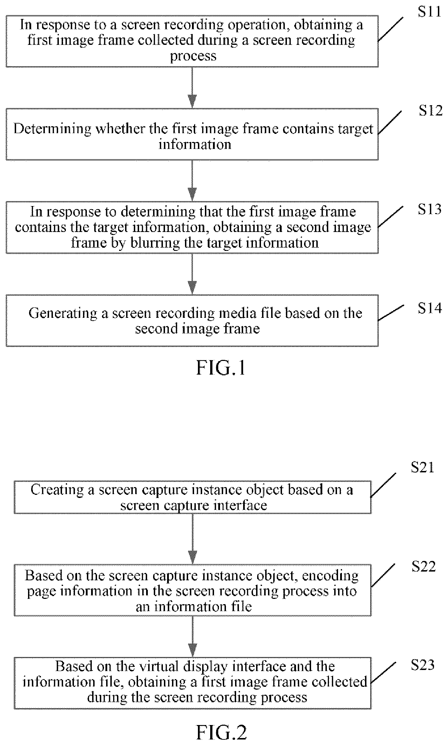

In view of this, the present invention provides a screen recording method, which integrates the screen recording function in the application layer of the electronic device. When the electronic device performs the screen recording function, it automatically identifies the privacy area and performs real-time masking processing on the privacy area. The implementation method of the screen recording method provided by the present invention is shown in FIG. 1. FIG. 1 is a flowchart of a screen recording method according to an example embodiment, including the following steps.

At step S11, in response to a screen recording operation, obtaining a first image frame collected during a screen recording process.

In the embodiment of the present invention, it is determined that the screen recording operation is started, and the first image frame in the screen recording process is obtained.

In one example, the screen recording function is started, all image frames in the screen recording interface are obtained, and all image frames are regarded as the first image frame, e.g., an image frame composed of desktop display icons of multiple components, or multiple image frames generated in the application when screen recording a single application.

The first image frame can be understood as the image corresponding to each frame in the screen recording process.

At step S12, determining whether the first image frame contains target information.

The target information can be understood as information that needs to be blurred during the screen recording process.

At step S13, in response to determining that the first image frame contains the target information, obtaining a second image frame by blurring the target information.

In the embodiment of the present invention, based on the fact that the first image frame obtained during the screen recording process contains the target information that needs to be blurred, the target information is blurred during the screen recording process, and a blurred second image frame is obtained.

The blurring process can be understood as covering the identified target information in the first image frame or replacing the target information with special symbols, etc.

In one example, the target information in the first image frame is mosaiced, or covered with stickers, or replaced with special characters.

At step S14, generating a screen recording media file based on the second image frame.

In the embodiment of the present invention, the screen recording media file after blurring is output.

The screen recording media file can include the second image frame after blurring the target area, and it also can include the first image frame for which blurring does not need to be performed.

According to the example embodiment of the present invention, by obtaining the first image frame collected during the screen recording process and identifying the information involved in the first image frame that needs to be blurred, such as user privacy information, it achieves the identification and mask for sensitive information, without the user manually selecting the masking area, thereby realizing privacy protection during the screen recording process, and improving the security of user privacy in the screen recording scenario. In the embodiment of the present invention, before performing screen recording of the target application, in order to realize the screen recording function, the target application needs to obtain the user's consent and request permission to read and write external storage and record audio. The permission to read and write external storage allows the target application to save the recorded video to the device storage, while the permission to record audio allows the target application to record the sound from the device microphone.

In the embodiment of the present invention, when there is a permission to record screen during the screen recording process, the target application is usually screen recorded in the manner shown in FIG. 2. FIG. 2 is a flowchart of a method for screen recording a target application according to an example embodiment, including the following steps.

At step S21, creating a screen capture instance object based on a screen capture interface.

In the embodiment of the present invention, a screen capture instance object is created specifically for subsequent target application page information capture according to the screen capture interface provided by the operating system.

In one example, an application can create a MediaProjection instance by calling the createScreenCaptureIntent() method of MediaProjectionManager. The created instance provides the ability to capture screen content, allowing the screen recording function to record only a specific application window, excluding other system interface elements such as the status bar and notification center.

At step S22, based on the screen capture instance object, encoding page information in the screen recording process into an information file.

In the embodiment of the present invention, according to the screen capture instance object, the current page information of the target application is captured, and the captured page information is encoded into an information file of a specific format.

In one example, MediaRecorder is responsible for encoding the obtained page information stream into a file.

At step S23, based on the virtual display interface and the information file, obtaining a first image frame collected during the screen recording process.

In the embodiment of the present invention, with the help of the virtual display interface, the encoded information file is read to simulate the screen output of the target application, thereby realizing the continuous recording of the target application page.

In an example, a VirtualDisplay is created, and the VirtualDisplay acts as a virtual screen, and its content is encoded and recorded by MediaRecorder. The application creates VirtualDisplay through the MediaProjection instance, and sets MediaRecorder as the callback function of VirtualDisplay to start the recording process.

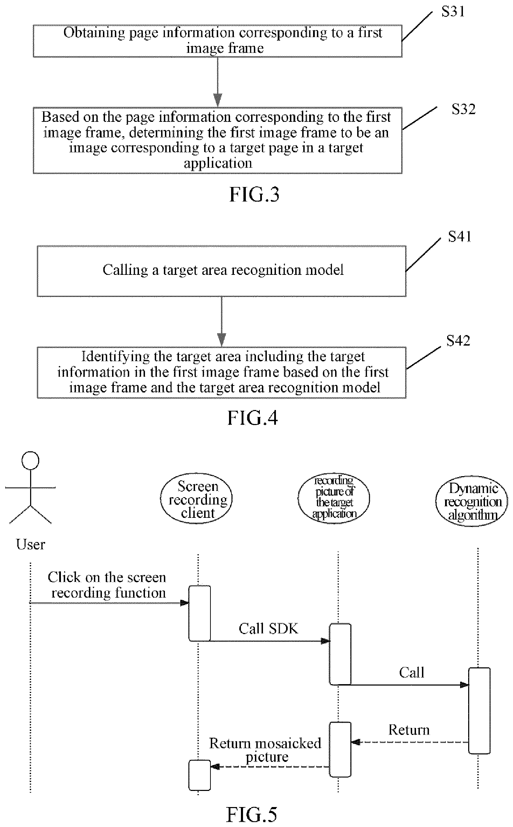

According to the example embodiment of the present invention, the screen capture instance object is created to ensure the implementation of the screen capture function, and the page information of the screen capture instance object is encoded as an information file to simplify the data processing process and reduce the consumption of system resources. In the embodiment of the present invention, during the screen recording process, it is determined that the first image frame contains target information, and the method shown in FIG. 3 is adopted. FIG. 3 is a flowchart of determining a target page according to an example embodiment, including the following steps.

At step S31, obtaining page information corresponding to a first image frame.

In the embodiment of the present invention, the first image frame is selected from a collection of the screen recording streams as the analysis object.

At step S32, based on the page information corresponding to the first image frame, determining the first image frame to be an image corresponding to a target page in a target application.

In the embodiment of the present invention, the page information corresponding to the selected first image frame is extracted to determine that the first image frame contains target information.

In one example, the page information corresponding to the first image frame obtained during the screen recording process is extracted to determine whether there is privacy information in the page information. If there is privacy information, the first image frame is determined to be an image corresponding to the target page in the target application.

According to the example embodiment of the present invention, the page information corresponding to the obtained first image frame is extracted and processed, and then the current first image frame is determined to be an image involving user privacy information, so as to realize the automatic identification of the application and page to which the first image frame belongs, and improve the identification efficiency.

In the embodiment of the present invention, if it is determined that the target information is identified for the first image frame, the target information is blurred. The blurring method is to cover the target area according to the target area including the target information in the first image frame, and obtain a second image frame after the target area in the first image frame is covered.

In one example, when a target page in a target application is detected for the first image frame generated during the screen recording process, the target area in the first image frame is identified.

The target area can be understood as an area that needs to be blurred, such as an area involving user privacy, and the target page can be understood as a page containing a blurred area, such as a page involving user privacy. The target information can be understood as blurred information involved in the target area of the target page, such as user privacy information.

According to an example embodiment of the present invention, the target area involving target information in the first image frame is analyzed, and the target area is masked to protect the information security of the information involved in the target area, and the target area is masked without affecting the information display of the non-target area information, thereby improving the user experience.

In one embodiment, the target area can be understood as a preset fixed area. At this time, if the target information is detected in the target area, the target area is directly blurred. The target area can also be understood as a non-fixed area. At this time, if the target information is detected, the first image frame is identified so as to determine the target area.

In an embodiment of the present invention, a target area including target information in the first image frame is identified. If information content is detected in the preset target area, it is determined that the identified target area includes target information, and the area is masked.

The preset target area can be understood as an area outside the application.

In one example, if the first image frame is an image frame composed of multiple component icons, the target area is set to be an upper fixed area of the image frame, and the upper fixed area in the first image frame is directly blurred. The determining method of the area position of the fixed area is not limited in the present invention, such as a fixed position can be pre-set, and the area shape is not limited in the present invention, such as a rectangle, etc.

For example, during the recording process, the user interaction element of the third-party application is identified, and the notification message is automatically detected and shielded to prevent it from appearing on the screen recording screen, thereby protecting the user's privacy. For example, during the screen recording process, a third-party notification message pops up, and the application corresponding to the third-party notification message is automatically detected, and it is determined that the application belongs to an application involving user privacy, and the third-party notification message is shielded to prevent it from appearing on the screen recording screen.

According to an example embodiment of the present invention, when the target area is a fixed area, during the screen recording process, if the first image frame is identified to involve a fixed area, then it is directly masked, reducing the operation process of target information identification, and improving masking accuracy and masking efficiency.

In the embodiment of the present invention, if the target area is a non-preset area, such as performing a screen recording operation in an application, then after obtaining the identification of the display elements of the application, the target area including the target information is further identified.

In the embodiment of the present invention, if the purpose of the screen recording operation is to perform the screen recording operation in the application, during the screen recording process, the display elements of the screen recording interface are identified, the interface display elements are retained as target interface display elements, and non-target interface display elements are filtered out.

The target interface display element can be understood as the interface display element of the page of the corresponding icon of the application.

In one example, during the recording process, the currently captured page can be set as the target page by the setting component. For example, during the recording process, by configuring the parameters of MediaRecorder and VirtualDisplay, it can be ensured that the recorded content is limited to the visible area of the application, avoiding capturing the screen of other non-target applications.

For example, a deep learning model (such as a convolutional neural network (CNN)) is configured to analyze the interface of the target application in real time to identify various elements on the interface, including buttons, text boxes, menu items, etc. According to pre-set rules or user-defined settings, the privacy-related parts of the interface elements belonging to the target application, namely, "target interface display elements", are determined. After all interface elements are identified, other elements that do not belong to the target interface display elements are marked as "non-target interface display elements", such as system taskbars, desktop icons, pop-up notifications, etc. During the recording process, the changes of interface elements are continuously monitored, and new elements or elements with changed states are reclassified and judged to ensure the accuracy of the recorded content.

According to an example embodiment of the present invention, by identifying interface elements during the screen recording process, irrelevant elements are effectively filtered out, thereby improving the quality and efficiency of recorded videos.

In the embodiment of the present invention, when the target area is detected as a non-preset area, the target area including target information in the first image frame is identified in the manner shown in FIG. 4. FIG. 4 is a flowchart of a method for identifying a target area according to an example embodiment, including the following steps.

At step S41, calling a target area recognition model.

The target area recognition model is configured to obtain the target area including the target information by identifying based on the first image frame.

In the embodiment of the present invention, the target area recognition model is called. The target area where the target information is located is obtained by identifying by the target area recognition model according to the obtained first image frame.

At step S42, identifying the target area including the target information in the first image frame based on the first image frame and the target area recognition model.

In the embodiment of the present invention, for the obtained first image frame and the target area recognition model, the target area including the target information in the first image frame is determined.

In the embodiment of the present invention, during the screen recording process, the target area recognition model is called for each first image frame, and the area containing the target information in the image is analyzed and located through the deep neural network structure of the model. And according to the specific location of the target information in the first image frame, it is marked as the target area.

In one example, during the screen recording process, for the privacy information involved in each image frame displayed by the target application, the system detects and identifies the privacy information area contained in the picture, such as the user avatar, nickname and chat title. The position coordinates of the privacy area are determined by the image detection algorithm. The coordinate position of the privacy area can be determined in the following manner:

receiving the picture and its page information sent by the screen recording application; determining whether the picture belongs to the target page involving the privacy application; when the target page involving the privacy application is determined, preprocessing the image, adjusting the image size to meet the input requirements of the image detection model, and then calling the image detection algorithm to identify the privacy area; inputting the processed image into the detection model for analysis, and outputting the accurate coordinates of the privacy area.

In an example embodiment, the processing process receives the picture and picture page information transmitted during the screen recording process, and determines whether it is the target page according to the picture page information. If it is the target page, the image detection algorithm module is called to perform privacy area detection on the input picture. The image detection algorithm module first performs preprocessing such as scaling on the input picture so that the image size meets the input conditions of the model, and then inputs the preprocessed image into the model for detection. The post-processing process optimizes the detection results and outputs the coordinate information of the privacy area.

According to the example embodiment of the present invention, the target area recognition model is used to make the target area recognition more accurate and efficient, without manual intervention, and automatically complete the recognition and masking of the target information, thereby improving the user experience.

In the embodiment of the present invention, when it is detected that the content of the screen recording is non-target information, the screen recording media file is directly output, and there is no need to perform the detection of the target information or the detection of the target area.

According to the embodiment of the present invention, when it is detected that the content of the screen recording is non-target information, the screen recording media file is directly output, unnecessary identification operations are reduced, and the efficiency of screen recording is improved.

In the embodiment of the present invention, the method shown in FIG. 5 is adopted to screen record the target application to be screen recorded for the screen recording function integrated in the application layer. FIG. 5 is a schematic diagram of screen recording according to an example embodiment.

In the embodiment of the present invention, in response to the user clicking the screen recording function, the screen recording is triggered on the screen recording client. During the screen recording process, the software development kit (Software Development Kit Invocation, SDK) is called, and the screen of the target application is recorded according to the data resources in the SDK, and the image of each frame is obtained. According to the image of each frame, the dynamic recognition algorithm is called, and the dynamic recognition algorithm is configured to identify the privacy information involved in the image, and the privacy information is masked. Each frame of the masked image is returned to the screen recording client to obtain the real-time masked screen recording media file.

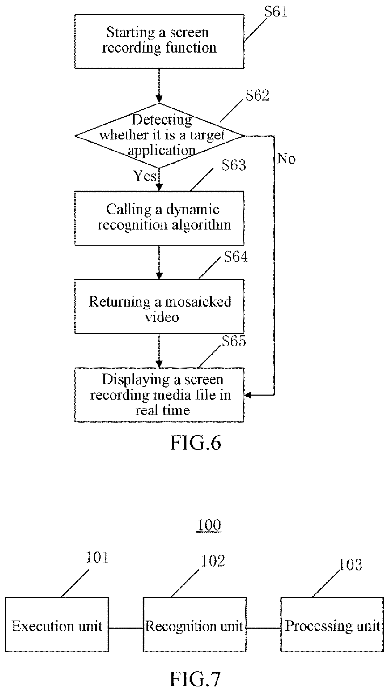

In the embodiment of the present invention, the method shown in FIG. 6 is adopted to screen record the target application to be screen recorded for the screen recording function integrated in the application layer. FIG. 6 is a flow chart of screen recording shown according to an example embodiment, including the following steps:
At step S61, starting a screen recording function.
At step S62, detecting whether it is a target application.

In the embodiment of the present invention, in response to starting the screen recording function, it is detected whether the current application to be screen recorded is the target application. If so, step S63 is executed, and if not, step S65 is executed.

The target application can be understood as an application involving privacy content pre-set by the user.

At step S63, calling a dynamic recognition algorithm.

In the embodiment of the present invention, when it is detected that the current application to be screen recorded is the target application, the dynamic recognition algorithm is called, and the privacy information is masked using the dynamic recognition algorithm. The process of mosaicking the privacy information using the dynamic recognition algorithm refers to step S42.

At step S64, returning a masked video.

In the embodiment of the present invention, the video after the privacy information is masked using the dynamic recognition algorithm is returned.

At step S65, displaying a screen recording media file in real time.

Based on the same concept, the embodiment of the present invention also provides a screen recording device.

It can be understood that in order to realize the above functions, the screen recording device provided by the embodiment of the present invention includes hardware structures and/or software modules corresponding to each function. Combined with the units and algorithm steps of each example disclosed in the embodiment of the present invention, the embodiment of the present invention can be implemented in the form of hardware or a combination of hardware and computer software. Whether a function is executed in the form of hardware or computer software driving hardware depends on the specific application and design constraints of the technical solution. Those skilled in the art can use different methods to implement the described functions for each specific application, but such implementation should not be considered to exceed the scope of the technical solution of the embodiment of the present invention.

FIG. 7 is a block diagram of a screen recording device according to an example embodiment. Referring to FIG. 7, the device 100 includes an execution unit 101, a recognition unit 102 and a processing unit 103.

The execution unit 101 is configured to obtain a first image frame collected during the screen recording process in response to a screen recording operation.

The recognition unit 102 is configured to determine whether the first image frame contains target information.

The processing unit 103 is configured to obtain a second image frame by blurring the target information in response to the first image frame containing target information; and generate a screen recording media file based on the second image frame.

In one embodiment, the processing unit 103 performs blur processing on the target information in the following manner: identifying a target area including target information in the first image frame; and covering the target area in response to identification of the target area including target information.

In one embodiment, the processing unit 103 identifies the target area including target information in the first image frame in the following manner: detecting information content in a preset target area. The processing unit 103 determines that the target area including target information is identified in the following manner: in response to the detection of information content in the target area, determining that the target area including target information is identified.

In one embodiment, the recognition unit 102 identifies the target area including target information in the first image frame in the following manner: calling a target area recognition model, the target area recognition model is configured to identify the target area including target information based on the first image frame; based on the first image frame and the target area recognition model, identifying the target area including target information in the first image frame.

In one embodiment, in response to the screen recording operation, the execution unit 101 obtains the first image frame collected during the screen recording process in the following manner: based on the screen capture interface, creating a screen capture instance object; based on the screen capture instance object, encoding the page information in the corresponding screen recording process into an information file; based on the virtual display interface and the information file, obtaining the first image frame collected during the screen recording process.

In one embodiment, the recognition unit 102 determines that the first image frame contains target information in the following manner: obtaining the page information corresponding to the first image frame; based on the page information corresponding to the first image frame, determining that the first image frame contains target information.

In one embodiment, the execution unit 101 is further configured to: during the screen recording process, identify the interface display element, retain the interface display element as the target interface display element, and filter out the non-target interface display element.

In one embodiment, the processing unit 103 is further configured to: in response to the first image frame not containing the target information, generate a screen recording media file based on the first image frame.

Regarding the device in the above embodiment, the specific manner in which each module performs the operation has been described in detail in the embodiment of the method, and will not be elaborated here.

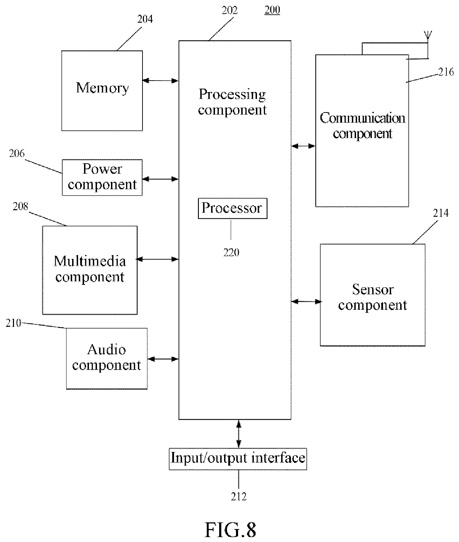

FIG. 8 is a block diagram of a device 200 for screen recording according to an example embodiment. For example, the device 200 may be a mobile phone, a computer, a digital broadcast terminal, a messaging device, a game console, a tablet device, a medical device, a fitness device, a personal digital assistant, etc.

Referring to FIG. 8, the device 200 may include one or more of the following components: a processing component 202, a memory 204, a power component 206, a multimedia component 208, an audio component 210, an input/output (I/O) interface 212, a sensor component 214, and a communication component 216.

The processing component 202 generally controls the overall operation of the device 200, such as operations associated with display, phone calls, data communications, camera operations, and recording operations. The processing component 202 may include one or more processors 220 to execute instructions to complete all or part of the steps of the above method. In addition, the processing component 202 may include one or more modules to facilitate the interaction between the processing component 202 and other components. For example, the processing component 202 may include a multimedia module to facilitate the interaction between the multimedia component 208 and the processing component 202.

The memory 204 is configured to store various types of data to support operations on the device 200. Examples of such data include instructions for any application or method operating on the device 200, contact data, phone book data, messages, pictures, videos, etc. The memory 204 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 206 provides power to various components of the device 200. The power component 206 may include a power management system, one or more power supplies, and other components associated with generating, managing, and distributing power for the device 200.

The multimedia component 208 includes a screen that provides an output interface between the device 200 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 208 includes a front camera and/or a rear camera. When the device 200 is in an operating mode, such as a shooting mode or a video mode, the front camera and/or the rear camera may receive external multimedia data. Each of the front camera and the rear camera may be a fixed optical lens system or have focal length and optical zoom capabilities.

The audio component 210 is configured to output and/or input audio signals. For example, the audio component 210 includes a microphone (MIC), which is configured to receive external audio signals when the device 200 is in an operating mode, such as a call mode, a recording mode, and a voice recognition mode. The received audio signal may be further stored in the memory 204 or sent via the communication component 216. In some embodiments, the audio component 210 also includes a speaker for outputting audio signals.

The I/O interface 212 provides an interface between the processing component 202 and the peripheral interface module. The peripheral interface module may be a keyboard, a click wheel, a button, etc. These buttons may include, but are not limited to: a home button, a volume button, a start button, and a lock button.

The sensor component 214 includes one or more sensors for providing various aspects of status evaluation for the device 200. For example, the sensor component 214 can detect the open/closed state of the device 200, the relative positioning of the components, such as the display and the keypad of the device 200. The sensor component 214 can also detect the position change of the device 200 or a component of the device 200, the presence or absence of contact between the user and the device 200, the orientation or acceleration/deceleration of the device 200, and the temperature change of the device 200. The sensor component 214 may include a proximity sensor configured to detect the presence of a nearby object without any physical contact. The sensor component 214 may also include a light sensor, such as a CMOS or CCD image sensor, for use in imaging applications. In some embodiments, the sensor component 214 may also include an accelerometer, a gyroscope, a magnetic sensor, a pressure sensor, or a temperature sensor.

The communication component 216 is configured to facilitate wired or wireless communication between the device 200 and other devices. The device 200 can access a wireless network based on a communication standard, such as WiFi, 4G or 5G, or a combination thereof. In an example embodiment, the communication component 216 receives a broadcast signal or broadcast-related information from an external broadcast management system via a broadcast channel. In an example embodiment, the communication component 216 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology, and other technologies.

In an example embodiment, the device 200 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above method.

In an example embodiment, a non-transitory computer-readable storage medium including instructions is also provided, such as a memory 204 including instructions, and the above instructions can be executed by a processor 220 of the device 200 to complete the above method. For example, the non-transitory computer-readable storage medium may be a ROM, a random access memory (RAM), a CD-ROM, a tape, a floppy disk, and an optical data storage device.

In some embodiments of the present invention, a computer program product is also provided, including a computer program, where the computer program implements the screen recording method in the above embodiment when executed by the processor.

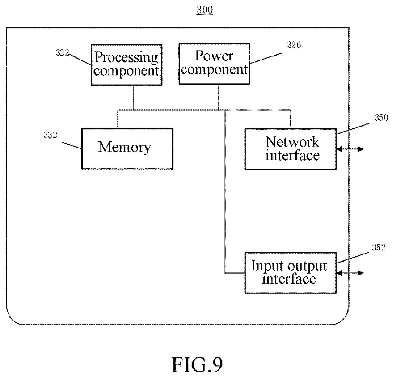

FIG. 9 is a block diagram of a device 300 for screen recording according to an example embodiment. For example, the device 300 may be provided as a server. Referring to FIG. 3, the device 300 includes a processing component 322, which further includes one or more processors, and a memory resource represented by a memory 332 for storing instructions executable by the processing component 322, such as an application. The application stored in the memory 332 may include one or more modules each corresponding to a set of instructions. In addition, the processing component 322 is configured to execute instructions to perform the above-mentioned screen recording method.

The device 300 may also include a power component 326 configured to perform power management of the device 300, a wired or wireless network interface 350 configured to connect the device 300 to a network, and an input/output (I/O) interface 352. The device 300 may operate based on an operating system stored in the memory 332, such as Windows ServerTM, Mac OS XTM, UnixTM, LinuxTM, FreeBSDTM or the like.

It is understood that "multiple" in the present disclosure refers to two or more, and other quantifiers are similar. "And/or" describes the association relationship of associated objects, indicating that there can be three relationships. For example, A and/or B can mean: A exists alone, A and B exist at the same time, and B exists alone. The character "/" generally indicates that the objects associated before and after are in an "or" relationship. The singular forms of "a", "the" and "said" are also intended to include the plural forms unless the context clearly indicates other meanings.

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present invention, the first information can also be referred to as the second information, and similarly, the second information can also be referred to as the first information.

It is further understood that, unless otherwise specified, "connection" includes direct connection without other components between the two, and also includes indirect connection with other elements between the two.

It is further understood that, although the operations are described in a specific order in the drawings in the embodiments of the present invention, it should not be understood as requiring the operations to be performed in the specific order shown or in a serial order, or requiring the execution of all the operations shown to obtain the desired results. In certain environments, multitasking and parallel processing may be advantageous.

Other embodiments of the present invention will be easily conceived by those skilled in the art after considering the specification and practicing the present disclosure herein. This application is intended to cover any variation, use or adaptation of the present invention, which fall within the scope of the claims.

It should be understood that the present invention is not limited to the precise structure described above and shown in the accompanying drawings, and various modifications and changes can be made without departing from its scope. The scope of the present invention is limited only by the scope of the attached claims.

## Claims

1. A method for screen recording, comprising:
in response to a screen recording operation, obtaining (S11) a first image frame collected during a screen recording process;
determining (S12) whether the first image frame contains target information;
in response to determining that the first image frame contains the target information, obtaining (S13) a second image frame by blurring the target information; and
generating (S14) a screen recording media file based on the second image frame.

2. The method according to claim 1, wherein blurring the target information comprises:
identifying a target area comprising the target information in the first image frame; and
in response to determining that the target area comprising the target information is identified, covering the target area.

3. The method according to claim 2, wherein identifying the target area comprising the target information in the first image frame comprises:
detecting information content in a preset target area; and
wherein determining that the target area comprising the target information is identified comprises:
in response to the information content being detected in the target area, determining that the target area comprising the target information is identified.

4. The method according to claim 2, wherein identifying the target area comprising the target information in the first image frame comprises:
calling (S41) a target area recognition model, wherein the target area recognition model is configured to obtain the target area comprising the target information by identifying based on the first image frame; and
identifying (S42) the target area comprising the target information in the first image frame based on the first image frame and the target area recognition model.

5. The method according to any one of claims 1 to 4, wherein in response to the screen recording operation, obtaining the first image frame collected during the screen recording process comprises:
creating (S21) a screen capture instance object based on a screen capture interface;
encoding (S22) page information corresponding to the screen recording process into an information file based on the screen capture instance object; and
obtaining (S23) the first image frame collected during the screen recording process based on a virtual display interface and the information file.

6. The method according to any one of claims 1 to 5, wherein determining that the first image frame contains the target information comprises:
obtaining (S31) page information corresponding to the first image frame; and
determining (S32) that the first image frame contains the target information based on the page information corresponding to the first image frame.

7. The method according to claim 4, further comprising:
during the screen recording process, performing interface display element identification, retaining an interface display element as a target interface display element, and filtering out a non-target interface display element.

8. The method according to any one of claims 1 to 7, further comprising:
in response to the first image frame not containing the target information, generating the screen recording media file based on the first image frame.

9. The method according to claim 3, wherein the preset target area is an area outside the application.

10. The method according to claim 3, wherein the first image frame is an image frame composed of multiple component icons, and the preset target area is set to be an upper fixed area of the first image frame.

11. The method according to any one of claims 1 to 10, further comprising:
in response to determining that an application corresponding to a third-party notification message belongs to a target application, shielding the third-party notification message.

12. An electronic device, comprising:
a processor (220; 322); and
a memory (204; 332) for storing processor executable instructions;
wherein the processor is configured to execute the method according to any one of claims 1 to 11.

13. A non-transitory storage medium, wherein the storage medium stores instructions, and when the instructions in the storage medium are executed by a processor, the method according to any one of claims 1 to 11 is executed.
